# FASCICULE DE BREVET EUROPEEN

(11) **EP 1 616 648 B1**
(45) Date de publication et mention de la délivrance du brevet: **28.04.2010**
(21) Numéro de dépôt: 05104400.6
(22) Date de dépôt: 24.05.2005
(51) Int. Cl.: B23B 47/34, B23Q 11/00

(54) **Dispositif de perçage et procédé de perçage mis en oeuvre par un tel dispositif**
Bohrvorrichtung und Bohrverfahren in dem eine derartige Vorrichtung eingesetzt wird
Drilling device and drilling process using such device

(30) Priorité: 26.05.2004 FR 0451030
(43) Date de publication de la demande: 18.01.2006
(73) Titulaire: AIRBUS OPERATIONS, 31060 Toulouse (FR)
(72) Inventeur: Janson, Jean-Philippe, 80800 Le Hamel (FR)
(74) Mandataire: Poulin, Gérard

(56) Documents cités:
- EP-A- 1 430 994
- DE-A1- 19 651 662
- US-A- 5 779 402

## Description

### DOMAINE TECHNIQUE

La présente invention se rapporte de façon générale au domaine du perçage intégrant les techniques de perçage, les techniques de perçage-fraisurage, et toute autre technique analogue utilisant une perceuse associée à un outil tournant, tel qu'un foret.

Plus précisément, l'invention concerne les dispositifs de perçage semi-automatisés et automatisés permettant de réaliser de telles techniques, ainsi que les procédés de perçage mis en oeuvre par ces dispositifs.

Un dispositif de perçage selon le préambule de la revendication 1 est connu par example du document FR-A-2,695,341.

### ÉTAT DE LA TECHNIQUE ANTÉRIEURE

De façon connue de l'homme du métier, la qualité du résultat obtenu avec de tels dispositifs de perçage dépend de différents paramètres, parmi lesquels on compte évidemment la bonne lubrification de l'outil tournant.

De plus, il est grandement souhaitable d'obtenir un résidu de lubrifiant le plus faible possible à l'intérieur du trou qui vient d'être percé. En effet, le faible résidu de lubrifiant permet d'éviter l'adhérence de particules de copeaux sur la surface usinée, et permet également d'éviter de polluer cette surface usinée avec un lubrifiant susceptible de nuire aux applications et/ou aux fonctionnalités de la pièce percée, ce cas pouvant notamment être rencontré lorsque le lubrifiant dispose de propriétés anti-adhérence.

Par ailleurs, la qualité du résultat obtenu est aussi fonction de la bonne évacuation des copeaux produits lors du perçage. Effectivement, dans le cas où cette évacuation n'est pas efficace et qu'une partie des copeaux reste en place, ceux-ci peuvent alors être entraînés en rotation avec l'outil tournant, et par conséquent rayer le trou réalisé ainsi que son environnement immédiat.

Dans les dispositifs de perçage classiques de l'art antérieur, il est habituellement prévu d'aspirer les copeaux durant chaque opération élémentaire de perçage, ce qui permet d'assurer une évacuation satisfaisante des copeaux.

Si le balayage par flux d'air effectué est satisfaisant en termes d'évacuation des copeaux, il a cependant pour effet néfaste d'aspirer dans un même temps le lubrifiant, ce qui a bien évidemment pour conséquence directe de détériorer la qualité globale du trou réalisé, et éventuellement d'endommager le foret utilisé.

A ce titre, il est noté que cet inconvénient d'aspiration du lubrifiant peut être évité en injectant celui-ci sous pression élevée. Néanmoins, cette technique d'injection sous pression importante engendre naturellement une augmentation de la quantité de lubrifiant nécessaire, ainsi qu'une hausse de la consommation d'énergie en raison de la mise sous pression élevée réalisée.

En outre, il est précisé que le fait de lubrifier l'outil sous pression importante provoque généralement l'apparition d'un résidu non négligeable de lubrifiant à l'intérieur du trou percé, ce qui génère les inconvénients mentionnés ci-dessus relatifs à l'adhérence des particules de copeaux et à la pollution de la surface usinée du trou obtenu.

De l'art antérieur, il est également connu le document DE-A-19651662, décrivant un procédé mettant en oeuvre un flux d'air en permanence. Cela dégrade la lubrification durant les opérations élémentaires de perçage.

### EXPOSÉ DE L'INVENTION

L'invention a donc pour but de proposer un dispositif de perçage et un procédé de perçage mis en oeuvre par un tel dispositif, ces dispositif et procédé remédiant au moins partiellement aux inconvénients mentionnés ci-dessus relatifs aux réalisations de l'art antérieur.

Plus précisément, le but de l'invention est de présenter un dispositif et un procédé de perçage permettant d'assurer une évacuation satisfaisante des copeaux tout en conservant une bonne lubrification de l'outil, sans que cette lubrification ne soit nécessairement réalisée sous pression élevée.

Pour ce faire, l'invention a tout d'abord pour objet un dispositif de perçage à outil tournant comportant une perceuse apte à mettre l'outil tournant en rotation, ainsi que des moyens de lubrification permettant de lubrifier l'outil tournant. Selon l'invention, le dispositif comporte en outre :
- une chambre intermédiaire de stockage de copeaux produits lors d'une opération élémentaire de perçage ;
- des moyens d'introduction permettant d'introduire, lors de l'opération élémentaire de perçage, les copeaux dans la chambre intermédiaire de stockage, ces moyens d'introduction étant conçus de façon à fonctionner autrement qu'en générant un flux d'air ;
- une chambre principale de stockage des copeaux communiquant avec la chambre intermédiaire de stockage ; et
- des moyens de balayage aptes à générer un flux d'air assurant un balayage des copeaux présents dans la chambre intermédiaire de stockage, vers la chambre principale de stockage.

D'autre part, l'invention a également pour objet un procédé selon la revendication 11.

Ainsi, il est à comprendre que le principe général de l'invention réside d'une part dans le fait de pré-stocker les copeaux dans une chambre intermédiaire durant une opération élémentaire de perçage, à l'aide de moyens d'introduction ne mettant pas en oeuvre de flux d'air et n'aspirant par conséquent pas le lubrifiant, et d'autre part dans le fait de vider cette chambre intermédiaire par aspiration et/ou soufflage uniquement après que l'opération élémentaire de perçage ait été terminée.

De cette manière, l'évacuation par flux d'air des copeaux étant expressément effectuée de telle sorte qu'elle ne puisse pas perturber la lubrification réalisée pour sa part dans un autre temps, on observe alors avantageusement une diminution du risque d'obtention de trous hors tolérances.

A ce titre, il est noté que le fait de dissocier les périodes de lubrification et les périodes de balayage par flux d'air des copeaux permet d'injecter le lubrifiant sous basse pression, ce qui engendre des avantages en termes de coûts et de qualité de l'état de surface du trou percé. Effectivement, l'injection sous basse pression permet de n'obtenir qu'un résidu de lubrifiant extrêmement faible dans le trou réalisé, limitant ainsi l'effet d'adhérence des particules de copeaux sur la surface usinée, ainsi que la pollution de cette dernière.

D'autre part, toujours en raison de la possibilité d'injecter le lubrifiant sous basse pression, la quantité de celui-ci nécessaire à la réalisation de chaque opération élémentaire de perçage est significativement diminuée par rapport à celle rencontrée antérieurement.

De plus, il est à comprendre que lorsque plusieurs opérations élémentaires de perçage sont réalisées, le balayage par flux d'air des copeaux de la chambre intermédiaire de stockage vers la chambre principale s'effectue uniquement entre deux opérations élémentaires directement consécutives. Par conséquent, on rencontre avantageusement une diminution du bruit et de la consommation d'énergie liés à l'évacuation des copeaux produits.

De préférence, le dispositif de perçage est tel que les moyens d'introduction sont constitués par une forme adaptée de l'outil tournant, qui permet d'orienter automatiquement les copeaux produits vers la chambre intermédiaire de stockage située à proximité de cet outil. En d'autres termes, c'est uniquement la forme du foret qui permet de guider et d'éjecter les copeaux d'une façon déterminée assurant que ces copeaux s'introduisent automatiquement à l'intérieur de la chambre intermédiaire, sans qu'il ne soit nécessaire de faire appel à des moyens additionnels.

De manière préférentielle, l'outil tournant dispose de goujures hélicoïdales permettant d'obtenir un effet du type « vis d'Archimède ». Ainsi, cet effet facilement obtenu en prévoyant des goujures longues et profondes, permet de faire remonter les copeaux le long du foret dans un sens opposé à celui du perçage, jusqu'à ce que ces copeaux soient éjectés au niveau d'une extrémité des goujures, correspondant à une zone de jonction entre une partie à goujures et une partie centrale du foret.

De cette manière, il suffit donc de positionner judicieusement la chambre intermédiaire de stockage par rapport au foret, de sorte que les copeaux pénètrent directement et automatiquement à l'intérieur de cette chambre après avoir été éjectés de ce même foret. A cet égard, il est alors de préférence prévu que la zone de jonction entre les parties centrale et à goujures est située à l'intérieur de cette chambre intermédiaire de stockage, durant toute l'opération élémentaire de perçage. D'autre part, pour faciliter l'introduction des copeaux dans la chambre intermédiaire de stockage, la partie à goujures est de préférence agencée de sorte que son extrémité libre est orientée vers le haut, cette extrémité libre étant alors située au-dessus de la chambre intermédiaire de stockage, également durant toute l'opération élémentaire de perçage.

Toujours de façon préférée, les moyens de balayage comprennent des moyens d'aspiration ainsi que des moyens de soufflage. Naturellement, il aurait également été possible de prévoir que ces moyens de balayage ne comprennent que des moyens d'aspiration, ou bien même que des moyens de soufflage, sans sortir du cadre de l'invention.

Les moyens d'aspiration prennent de préférence la forme d'un système d'aspiration par effet Venturi, ce système communiquant naturellement avec la chambre intermédiaire de stockage des copeaux. Néanmoins, il est précisé que d'autres solutions sont naturellement envisageables, comme celle relative à l'emploi d'un aspirateur électrique associé à une vanne de séquencement, cette dernière étant prévue dans le but d'assurer une aspiration séquentielle nécessaire lorsque le dispositif automatisé ou semi-automatisé est destiné à effectuer successivement plusieurs opérations élémentaires de perçage.

A titre indicatif, il est rappelé qu'à la différence d'un dispositif automatisé, un dispositif semi-automatisé requiert l'intervention d'un opérateur entre deux opérations élémentaires de perçage.

Toujours dans le cas où les moyens d'aspiration prennent la forme d'un système d'aspiration par effet Venturi, celui-ci peut avantageusement intégrer la chambre principale de stockage des copeaux, et éventuellement remplir une fonction de filtre. De plus, ces moyens d'aspiration sont couplés à une électrovanne pneumatique permettant de produire l'aspiration séquentielle requise.

Préférentiellement, les moyens de soufflage prennent la forme d'une alimentation en air comprimé communiquant également avec la chambre intermédiaire de stockage des copeaux.

En outre, les moyens de lubrification sont avantageusement conçus de manière à permettre une lubrification par micro-pulvérisation d'huile entière, de préférence à basse pression.

Cependant, ici encore, d'autres solutions sont envisageables, telles que par exemple celle de dépôt de gouttes d'huile solide.

Enfin, comme cela a été évoqué précédemment, il est noté que dans le procédé de perçage objet de la présente invention, l'opération de balayage par flux d'air est de préférence stoppée avant qu'une nouvelle opération élémentaire de perçage ne soit mise en oeuvre.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe partiellement schématisée d'un dispositif de perçage selon un mode de réalisation préféré de la présente invention ; et
- la figure 2 représente une vue de face agrandie de l'outil tournant appartenant au dispositif de perçage montré sur la figure 1.

### EXPOSÉ DÉTAILLÉ DE MODES DE RÉALISATION PARTICULIERS

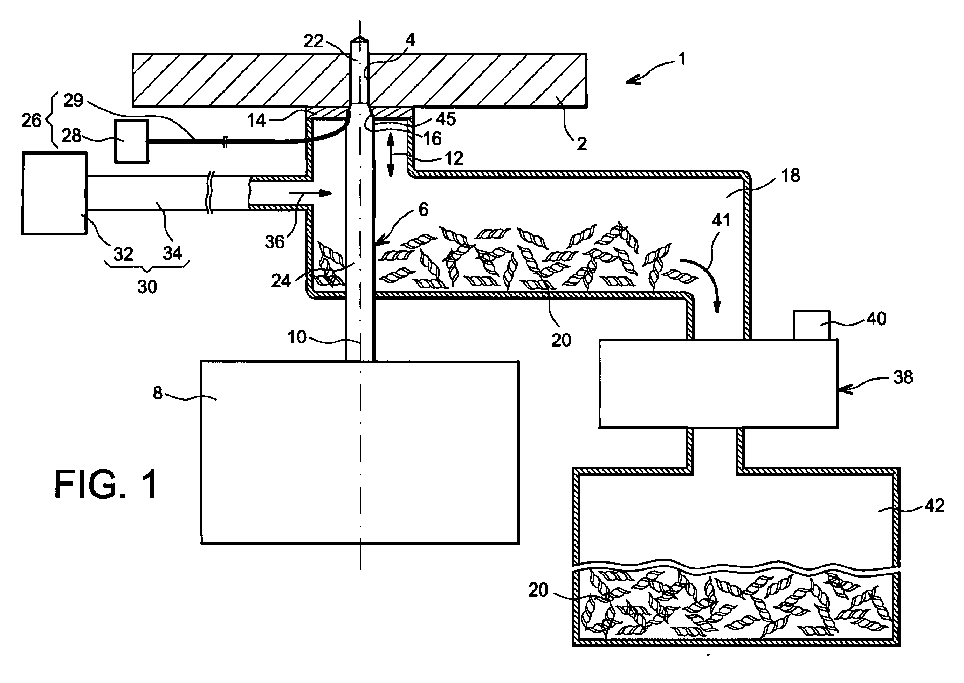

En référence à la figure 1, on voit un dispositif de perçage 1 selon un mode de réalisation préféré de la présente invention, ce dispositif 1 du type automatisé ou semi-automatisé étant représenté dans une position occupée à la fin d'une opération élémentaire de perçage. A cet égard, il est globalement admis qu'une opération élémentaire de perçage débute lorsqu'un outil tournant 6 du dispositif 1 est mis en rotation alors qu'il n'est pas encore entré en contact avec une pièce 2 à percer, et qu'elle se termine lorsque le trou 4 désiré est apparu, et que l'outil 6 se trouve encore à l'intérieur de ce dernier.

Le dispositif de perçage 1 comporte une perceuse 8 de type connu, sur laquelle est monté l'outil tournant 6 prenant la forme d'un foret. Cette perceuse 8 est donc capable de mettre le foret 6 en rotation autour de son propre axe 10, et de déplacer celui-ci dans une direction 12 parallèle à cet axe 10, comme cela est représenté schématiquement par la double-flèche de la figure 1.

Le dispositif 1 comporte un nez d'appui 14 destiné à être en contact avec la pièce 2 à percer, ce nez d'appui 14 étant pourvu d'une ouverture 16 afin de laisser passer le foret 6 lors du perçage, et conçu de manière à assurer un contact étanche avec la pièce 2 lorsqu'il est au contact de celle-ci, comme cela est représenté sur la figure 1.

Dans le mode de réalisation préféré qui est montré, le nez d'appui 14 participe à la délimitation d'une chambre intermédiaire de stockage 18 de copeaux 20, qui se situe au-dessous de ce nez 14.

Comme on peut le voir sur la figure 1, durant le perçage du trou 4, le foret 6 traverse la chambre intermédiaire 18 de façon à faire saillie de celle-ci vers le haut avec une partie à goujures 22, et vers le bas avec une partie centrale 24 du foret 6.

Si la chambre intermédiaire 18 s'étend au-dessous du nez 14 et donc le long du foret 6, il est cependant à noter que cette chambre 18 s'étend de préférence essentiellement selon un plan orthogonal à l'axe 10 du foret 6, comme cela est également visible sur la figure 1. En d'autres termes, la chambre intermédiaire de stockage 18 dispose d'une hauteur selon une direction associée à l'axe 10 qui est faible par rapport à une longueur selon une direction parallèle au plan orthogonal à ce même axe 10.

Des moyens de lubrification 26 sont agencés de manière à pouvoir assurer la lubrification du foret 6. Ces moyens 26 se présentent par exemple sous la forme d'un réservoir de lubrifiant 28 raccordé à un conduit 29 traversant une paroi de la chambre intermédiaire de stockage 18, afin de venir au plus près du foret 6.

Il est alors possible de réaliser une lubrification par micro-pulvérisation d'huile entière sous basse pression, la pression mise en oeuvre étant effectivement comprise entre 3 et 6 bars.

Par ailleurs, à proximité du nez d'appui 14, le dispositif 1 comporte des moyens de soufflage 30 comprenant de préférence une alimentation en air comprimé 32 raccordée à la chambre intermédiaire 18 à l'aide d'un conduit 34. A cet égard, comme le montre schématiquement la flèche 36, le conduit 34 est disposé de telle sorte que le flux d'air introduit dans la chambre intermédiaire 18 soit sensiblement parallèle au plan orthogonal à l'axe 10.

En outre, le soufflage s'effectue à une pression relativement basse, inférieure ou égale à 8 bars, à partir d'un réseau d'air comprimé disponible. Il est noté que les moyens de soufflage 30 ne participent aucunement à l'introduction des copeaux 20 dans la chambre intermédiaire 18, puisque de toute façon, ils ne sont pas mis en oeuvre durant l'opération élémentaire de perçage.

Des moyens d'aspiration 38 sont raccordés au bas de la chambre intermédiaire de stockage 18, et se présentent sous la forme d'un système d'aspiration par effet Venturi qui est couplé à une électrovanne pneumatique de séquencement 40, destinée à autoriser une aspiration séquentielle des copeaux 20.

Le système d'aspiration 38 permet de générer un fort flux d'air à l'intérieur de la chambre intermédiaire 18, comme le représente schématiquement la flèche 41. Ce flux d'air, de valeur adaptée à la nature de la matière percée, crée, dans cette dernière, une force d'entraînement ayant pour but d'évacuer les copeaux 20 présents dans la chambre 18 vers une chambre principale de stockage 42 également raccordée au système d'aspiration 38. A titre d'exemple indicatif, la valeur du flux d'air généré par le système d'aspiration 38 peut être comprise entre 120 et 180 m/s.

Ce balayage par flux d'air des copeaux 20 en direction de la chambre principale 42 s'effectue de préférence également à l'aide des moyens de soufflage 30, les moyens 30 et 38 constituant alors conjointement des moyens de balayage par flux d'air.

Il est noté que si le système d'aspiration par effet Venturi 38 et la chambre principale de stockage 42 ont été présentés comme constituant deux entités distinctes, il est naturellement possible de prévoir qu'elle forment un ensemble unique, qui serait alors également capable d'assurer une fonction de filtration des éléments transitant entre les chambres 18 et 42.

A titre d'exemple illustratif, la chambre principale de stockage 42 présente un volume environ cinquante fois supérieur ou plus à celui de la chambre intermédiaire 18.

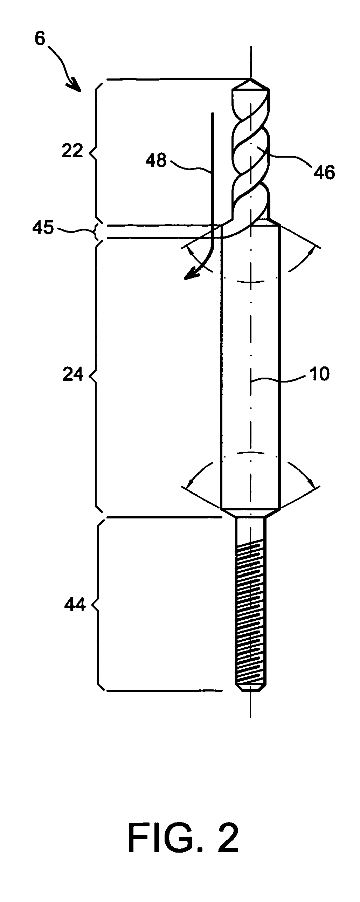

A présent en référence à la figure 2, on peut apercevoir une vue plus détaillée du foret 6 de la figure 1.

Ce foret 6 dispose effectivement d'une partie coupante et d'une partie à goujures 22, cette partie 22 étant raccordée à une partie centrale 24 servant de rallonge et qui se prolonge quant à elle par une partie filetée 44 servant au montage du foret 6 sur la perceuse 8. De plus, comme représenté, les parties 22 et 24 sont reliées rigidement entre elles par une zone de jonction 45 incluant une extrémité des goujures 46, cette zone de jonction 45 débutant tout de suite après une portion d'extrémité tronconique appartenant à la partie 22, et disposant donc d'un diamètre sensiblement égal à celui de la partie centrale 24, et par conséquent supérieur à celui de la partie 22 également appelé diamètre du foret 6.

La partie 22 présente donc une ou plusieurs goujures hélicoïdales 46, qui sont choisies profondes et longues, traversant la zone de jonction 45, afin qu'elles puissent procurer un effet du type « vis d'Archimède ». A cet égard, la profondeur des goujures est de l'ordre de 0,35 à 0,40 fois le diamètre de la partie 22 du foret, leur longueur étant suffisamment importante pour que les copeaux soient évacués loin de la zone de perçage.

Ainsi, comme le représente schématiquement la flèche 48, les copeaux produits durant l'opération élémentaire de perçage cheminent progressivement le long du foret 6 dans les goujures 46 en direction de la partie centrale 24, puis sont éjectés de celles-ci dès que leur extrémité haute arrive à la fin de ces goujures 46, c'est-à-dire au niveau de la fin de la zone de jonction 45. L'éjection peut alors s'effectuer avec un certain angle par rapport à l'axe 10 du foret 6, cet angle étant par exemple compris entre 30 et 50°.

La zone de jonction 45 des parties 22 et 24 du foret 6 étant située à l'intérieur de la chambre intermédiaire de stockage 18 durant toute la période de production de copeaux rencontrée lors de l'opération élémentaire de perçage, et plus généralement durant toute cette opération élémentaire, les copeaux 20 sont alors assurés d'être en permanence éjectés automatiquement à l'intérieur de cette chambre intermédiaire de stockage 18, sans qu'il ne soit généré un quelconque flux d'air.

Il va à présent être décrit un procédé de perçage selon un mode de réalisation préféré de la présente invention, ce procédé étant mis en oeuvre par le dispositif de perçage 1 qui vient d'être décrit. Naturellement, comme cela a été évoqué précédemment, il est rappelé que le procédé qui va être présenté ci-dessous est automatisé ou semi-automatisé.

Il est tout d'abord noté qu'avant de réaliser une opération élémentaire de perçage, le nez d'appui 14 est déplacé de façon à établir un contact étanche avec la pièce 2 à percer, ce contact s'effectuant bien évidemment de sorte que le foret 6 soit en regard du trou 4 à percer. A cet instant, le foret 6 ne fait pas encore saillie du nez 14 par l'ouverture 16, et sa partie à goujures 22 se trouve donc à l'intérieur de la chambre intermédiaire 18. A titre indicatif, il est précisé que l'opération préalable de déplacement du nez d'appui 14 provoque également le déplacement de tous les autres éléments du dispositif 1 qui sont solidaires de ce nez, tels que la chambre intermédiaire 18, la chambre principale 42, les moyens de balayage 30, 38, la perceuse 8 et le foret 6.

L'opération élémentaire de perçage peut alors commencer, par mise en rotation du foret 6 à l'aide de la perceuse 8. Cette mise en rotation est alors directement suivie d'un déplacement du foret 6 dans la direction 12 par rapport à la chambre intermédiaire 18, ce qui amène dans un premier temps ce foret 6 à entrer en contact avec la pièce 2 à percer.

C'est à cet instant que débute la production de copeaux 20, qui, grâce à l'effet de « vis d'Archimède » mentionné ci-dessus, sont automatiquement éjectés dans la chambre intermédiaire de stockage 18 après avoir successivement traversé l'ouverture 16 en empruntant les goujures 46, et rejoint une extrémité basse de ces goujures 46.

Les copeaux 20 s'accumulent donc dans la chambre intermédiaire 18 après avoir quitté les goujures 46, au niveau de la zone de jonction 45.

Avant l'entrée en contact du foret 6 avec la pièce 2 à percer, il est simultanément mis en oeuvre une opération de lubrification de ce foret 6, à l'aide des moyens de lubrification 26.

Cette opération de lubrification est généralement achevée avant que le foret 6 ne soit arrivé dans une position de fin de course de perçage, correspondant à celle représentée sur la figure 1. A cet égard, il est précisé que cette position marque la création du trou 4, ainsi que la fin de l'opération élémentaire de perçage.

Il est indiqué que l'absence de flux d'air durant l'opération de perçage implique évidemment que la lubrification n'est aucunement perturbée.

C'est alors lorsque l'opération élémentaire de perçage est terminée qu'il est procédé à une opération de balayage par flux d'air des copeaux 20 ayant été stockés dans la chambre intermédiaire 18. Cette opération de balayage combine donc le soufflage des moyens 30 et l'aspiration importante des moyens 38, cette dernière étant commandée par l'électrovanne 40.

Ainsi, les copeaux 20 sont évacués de la chambre intermédiaire 18 pour entrer dans la chambre principale 42, où ils rejoignent d'autres copeaux 20 ayant été produits lors d'opérations élémentaires précédentes.

Il est de préférence prévu que l'opération élémentaire suivante ne débute que lorsque l'opération de balayage susmentionnée est terminée, toujours dans le but d'éviter de provoquer une aspiration néfaste du lubrifiant injecté.

Ainsi, il ressort de ce qui précède que l'électrovanne pneumatique 40 permet d'obtenir une aspiration séquentielle des copeaux 20, dont les séquences d'aspiration se situent uniquement entre deux opérations élémentaires de perçage, et plus généralement durant des périodes où le lubrifiant n'est pas injecté.

Bien entendu, diverses modifications peuvent être apportées par l'homme du métier au dispositif de perçage 1 et au procédé de perçage qui viennent d'être décrits, uniquement à titre d'exemples non limitatifs. Ainsi, la perceuse pourrait porter plusieurs forets et donc assurer plusieurs opérations élémentaires de perçage simultanément. De plus, si le dispositif a été décrit comme présentant un foret dont la partie à goujures est orientée vers le haut, il est naturellement possible d'envisager que celui-ci soit orienté vers le bas, ou dans toute autre direction souhaitée.

## Revendications

1. Dispositif de perçage (1) à outil tournant (6) comportant une perceuse (8) apte à mettre l'outil tournant (6) en rotation, ainsi que des moyens de lubrification (26) permettant de lubrifier l'outil tournant (6), **caractérisé en ce qu'**il comprend en outre :
- une chambre intermédiaire de stockage (18) de copeaux (20) produits lors d'une opération élémentaire de perçage ;
- des moyens d'introduction (46) permettant d'introduire, lors de l'opération élémentaire de perçage, lesdits copeaux (20) dans ladite chambre intermédiaire de stockage (18), lesdits moyens d'introduction étant conçus de façon à fonctionner autrement qu'en générant un flux d'air ;
- une chambre principale de stockage (42) des copeaux (20) communiquant avec ladite chambre intermédiaire de stockage (18) ; et
- des moyens de balayage (30, 38) aptes à générer un flux d'air assurant un balayage desdits copeaux (20) présents dans la chambre intermédiaire de stockage (18), vers ladite chambre principale de stockage (42).

2. Dispositif de perçage (1) selon la revendication 1, **caractérisé en ce que** lesdits moyens d'introduction sont constitués par une forme adaptée de l'outil tournant (6), qui permet d'orienter automatiquement les copeaux produits (20) vers ladite chambre intermédiaire de stockage (18) située à proximité de cet outil (6).

3. Dispositif de perçage (1) selon la revendication 1 ou la revendication 2, **caractérisé en ce que** l'outil tournant (6) dispose de goujures hélicoïdales (46) permettant d'obtenir un effet du type « vis d'Archimède ».

4. Dispositif de perçage (1) selon l'une quelconque des revendications précédentes, **caractérisé en ce que** ledit outil tournant (6) dispose d'une partie (22) à goujures (46) et d'une partie centrale (24) solidaire de la partie (22), une zone de jonction (45) entre les parties centrale et à goujures (24, 22) étant située à l'intérieur de ladite chambre intermédiaire de stockage (18).

5. Dispositif de perçage (1) selon l'une quelconque des revendications précédentes, **caractérisé en ce que** lesdits moyens de balayage (30, 38) comprennent des moyens d'aspiration (38) ainsi que des moyens de soufflage (30).

6. Dispositif de perçage (1) selon la revendication 5, **caractérisé en ce que** lesdits moyens d'aspiration (38) prennent la forme d'un système d'aspiration par effet Venturi, ledit système communiquant avec ladite chambre intermédiaire de stockage (18) des copeaux (20).

7. Dispositif de perçage (1) selon la revendication 6, **caractérisé en ce que** ledit système d'aspiration par effet Venturi (38) intègre ladite chambre principale de stockage (42) des copeaux (20).

8. Dispositif de perçage (1) selon l'une quelconque des revendications 5 à 7, **caractérisé en ce que** lesdits moyens d'aspiration (38) sont couplés à une électrovanne pneumatique (40) permettant de produire une aspiration séquentielle.

9. Dispositif de perçage (1) selon l'une quelconque des revendications 5 à 8, **caractérisé en ce que** lesdits moyens de soufflage (30) prennent la forme d'une alimentation en air comprimé (32) communiquant avec ladite chambre intermédiaire de stockage (18) des copeaux (20).

10. Dispositif de perçage (1) selon l'une quelconque des revendications précédentes, **caractérisé en ce que** lesdits moyens de lubrification (26) sont conçus de manière à permettre une lubrification par micro-pulvérisation d'huile entière.

11. Procédé de perçage mis en oeuvre par un dispositif de perçage (1) selon l'une quelconque des revendications précédentes, ledit procédé comportant une opération élémentaire de perçage réalisée par l'intermédiaire de l'outil tournant (6) et de la perceuse (8), ainsi qu'une opération de lubrification de l'outil tournant (6) réalisée à l'aide des moyens de lubrification (26), ladite opération de lubrification étant mise en oeuvre durant l'opération élémentaire de perçage,
**caractérisé en ce que** ladite opération élémentaire de perçage, durant laquelle lesdits moyens d'introduction (46) sont mis en oeuvre et lesdits moyens de balayage (30, 38) restent inactifs, est suivie d'une étape de balayage par flux d'air des copeaux (20) ayant été introduits dans la chambre intermédiaire de stockage (18) lors de cette opération élémentaire de perçage et par l'intermédiaire desdits moyens d'introduction (46), ladite opération de balayage étant mise en oeuvre à l'aide desdits moyens de balayage (30, 38) de sorte que les copeaux (20) soient balayés de ladite chambre intermédiaire de stockage (18) vers ladite chambre principale de stockage (42).

12. Procédé de perçage selon la revendication 11, **caractérisé en ce que** ladite opération de balayage par flux d'air est stoppée avant qu'une nouvelle opération élémentaire de perçage soit mise en oeuvre.

## Claims

1. A drilling device (1) with a revolving tool (6) comprising a drilling machine (8) for setting the revolving tool (6) in rotation, as well as lubrication means (26) for lubricating the revolving tool (6), **characterised in that** it also comprises:
- an intermediate storage chamber (18) for chips (20) produced during an elementary drilling operation;
- introduction means (46) for introducing said chips (20) to said intermediate storage chamber (18) during the elementary drilling operation, said introduction means being designed to function other than by generating an air flow;
- a main storage chamber (42) of chips (20) communicating with said intermediate storage chamber (18); and
- sweeping means (30, 38) for generating an airflow ensuring sweeping of said chips (20) present in the intermediate storage chamber (18) towards said main storage chamber (42).

2. The drilling device (1) as claimed in claim 1, **characterised in that** said introduction means are constituted by an adapted form of the revolving tool (6), which automatically orients the resulting chips (20) towards said intermediate storage chamber (18) situated near this tool (6).

3. The drilling device (1) as claimed in claim 1 or claim 2, **characterised in that** the revolving tool (6) has helicoidal flutes (46) for producing an effect of Archimedes screw type.

4. The drilling device (1) as claimed in any one of the preceding claims, **characterised in that** said revolving tool (6) has a part (22) with flutes (46) and a central part (24) solid with the part (22), a joining zone (45) between the central and flutes parts (24, 22) being situated inside said intermediate storage chamber (18).

5. The drilling device (1) as claimed in any one of the preceding claims, **characterised in that** said sweeping means (30, 38) comprise suction means (38) as well as blowing means 30).

6. The drilling device (1) as claimed in claim 5, **characterised in that** said suction means (38) take the form of a suction system via Venturi effect, said system communicating with said intermediate storage chamber (18) for chips (20).

7. The drilling device (1) as claimed in claim 6, **characterised in that** said suction system via Venturi effect (38) integrates said main storage chamber (42) for chips (20).

8. The drilling device (1) as claimed in any one of claims 5 to 7, **characterised in that** said suction means (38) are coupled to a pneumatic electrovalve (40) for creating sequential suction.

9. The drilling device (1) as claimed in any one of claims 5 to 8, **characterised in that** said blowing means (30) take the form of compressed air supply (32) communicating with said intermediate storage chamber (18) for chips (20).

10. The drilling device (1) as claimed in any one of the preceding claims, **characterised in that** said lubrication means (26) are designed to enable complete-oil lubrication via micro-pulverisation.

11. A drilling process carried out by a drilling device (1), as claimed in any one of the preceding claims, said process comprising an elementary drilling operation executed by means of the revolving tool (6) and the drilling machine (8), as well as a lubrication operation of the revolving tool (6) executed by means of the lubrication means (26), said lubrication operation being carried out during the elementary drilling operation, **characterised in that** said elementary drilling operation, during which said introduction means (46) are utilised and said sweeping means (30, 38) remain inactive, is followed by a sweeping stage via air flow of chips (20) which have been introduced to the intermediate storage chamber (18) during this elementary drilling operation and by means of said introduction means (46), said sweeping operation being carried out by means of said sweeping means (30, 38) such that the chips (20) are swept from said intermediate storage chamber (18) to said main storage chamber (42).

12. The drilling process as claimed in claim 11, **characterised in that** said sweeping operation via airflow is stopped before a new elementary drilling operation is started.

## Patentansprüche

1. Bohrvorrichtung (1) mit Drehwerkzeug (6), umfassend eine Bohrmaschine (8), die das Drehwerkzeug (6) in Rotation versetzen kann, sowie Mittel zum Schmieren (26), die eine Schmierung des Drehwerkzeugs (6) ermöglichen, **dadurch gekennzeichnet, daß** die Bohrvorrichtung ferner umfaßt:
- eine Zwischenlagerungskammer (18) für Späne (20), die während eines elementaren Bohrvorgangs erzeugt werden;
- Einführungsmittel (46), die während des elementaren Bohrvorgangs die Einführung der Späne (20) in die Zwischenlagerungskammer (18) ermöglichen, wobei die Einführungsmittel derart gestaltet sind, daß sie in anderer Weise als unter Erzeugung eines Luftstroms wirken;
- eine Hauptlagerungskammer (42) für die Späne (20), die mit der Zwischenlagerungskammer (18) in Verbindung steht; und
- Spülmittel (30, 38), die einen Luftstrom erzeugen können, der ein Spülen der in der zwischenlagerungskammer (18) vorhandenen Späne (20) in die Hauptlagerungskammer (42) gewährleistet.

2. Bohrvorrichtung (1) nach Anspruch 1, **dadurch gekennzeichnet, daß** die Einführungsmittel eine an das Drehwerkzeug (6) angepaßte Form aufweisen, die eine automatische Lenkung der erzeugten Späne (20) in Richtung der Zwischenlagerungskammer (18), die sich in der Nähe dieses Werkzeugs (6) befindet, ermöglicht.

3. Bohrvorrichtung (1) nach Anspruch 1 oder Anspruch 2, **dadurch gekennzeichnet, daß** das Drehwerkzeug (6) schraubenförmige Einschnitte (46) aufweist, die es ermöglichen, eine Wirkung der Art einer "Archimedischen Schraube" zu erhalten.

4. Bohrvorrichtung (1) nach einem der vorhergehenden Ansprüche, **dadurch gekennzeichnet, daß** das Drehwerkzeug (6) einen Bereich (22) mit Einschnitten (46) und einen mit dem Bereich (22) verbundenen Mittelbereich (24) aufweist, wobei sich eine Verbindungszone (45) zwischen dem Mittelbereich und dem Bereich mit Einschnitten (24, 22) im Inneren der Zwischenlagerungskammer (18) befindet.

5. Bohrvorrichtung (1) nach einem der vorhergehenden Ansprüche, **dadurch gekennzeichnet, daß** die Spülmittel (30, 38) Saugmittel (38) sowie Blasmittel (30) umfassen.

6. Bohrvorrichtung (1) nach Anspruch 5, **dadurch gekennzeichnet, daß** die Saugmittel (38) die Form eines Saugsystems durch Venturi-Wirkung aufweisen, wobei das System mit der Zwischenlagerungskammer (18) für Späne (20) in Verbindung steht.

7. Bohrvorrichtung (1) nach Anspruch 6, **dadurch gekennzeichnet, daß** das Saugsystem durch Venturi-Wirkung (38) die Hauptlagerungskammer (42) für Späne (20) integriert.

8. Bohrvorrichtung (1) nach einem der Ansprüche 5 bis 7, **dadurch gekennzeichnet, daß** die Saugmittel (38) an ein pneumatisches Elektroventil (40) gekoppelt sind, das das Erzeugen eines sequentiellen Saugens ermöglicht.

9. Bohrvorrichtung (1) nach einem der Ansprüche 5 bis 8, **dadurch gekennzeichnet, daß** die Blasmittel (30) die Form einer Zufuhr von Druckluft (32) in Verbindung mit der Zwischenlagerungskammer (18) für Späne (20) aufweisen.

10. Bohrvorrichtung (1) nach einem der vorhergehenden Ansprüche, **dadurch gekennzeichnet, daß** die Mittel zum Schmieren (26) derart gestaltet sind, daß eine Schmierung durch Mikrozerstäubung von Vollöl möglich ist.

11. Bohrverfahren unter Verwendung einer Bohrvorrichtung (1) nach einem der vorhergehenden Ansprüche, wobei das Verfahren einen elementaren Bohrvorgang, der mittels des Drehwerkzeugs (6) und der Bohrmaschine (8) durchgeführt wird, sowie einen Schmiervorgang für das Drehwerkzeug (6), der mit Hilfe von Mitteln zum Schmieren (26) durchgeführt wird, wobei der Schmiervorgang während des elementaren Bohrvorgangs ausgeführt wird, umfaßt,
**dadurch gekennzeichnet, daß** auf den elementaren Bohrvorgang, während dessen die Einführungsmittel (46) betrieben werden und die Spülmittel (30, 38) inaktiv bleiben, eine Spülstufe durch einen Luftstrom für die Späne (20), die während dieses elementaren Bohrvorgangs und mittels der Einführungsmittel (46) in die Zwischenlagerungskammer (18) eingeführt wurden, folgt, wobei der Spülvorgang mit Hilfe der Spülmittel (30, 38) derart ausgeführt wird, daß die Späne (20) aus der Zwischenlagerungskammer (18) in die Hauptlagerungskammer (42) gespült werden.

12. Bohrverfahren nach Anspruch 11, **dadurch gekennzeichnet, daß** der Spülvorgang durch einen Luftstrom gestoppt wird, bevor ein neuer elementarer Bohrvorgang ausgeführt wird.
